Europäisches Patentamt

European Patent Office

Office européen des brevets

(19)

(11) Veröffentlichungsnummer: **0 175 160 B1**

(12) **EUROPÄISCHE PATENTSCHRIFT**

(45) Veröffentlichungstag der Patentschrift: **15.05.91**

(51) Int. Cl.⁵: **A23G 3/32, A23G 3/04**

(21) Anmeldenummer: **85110508.0**

(22) Anmeldetag: **21.08.85**

(54) **Verfahren zur Herstellung von karamelisierten Produkten.**

(30) Priorität: **19.09.84 DE 3434282**

(43) Veröffentlichungstag der Anmeldung:
**26.03.86 Patentblatt 86/13**

(45) Bekanntmachung des Hinweises auf die
Patenterteilung:
**15.05.91 Patentblatt 91/20**

(84) Benannte Vertragsstaaten:
**AT BE CH DE FR GB IT LI NL SE**

(56) Entgegenhaltungen:
**FR-A- 881 974        FR-A- 1 367 452
FR-A- 2 109 086      FR-A- 2 409 703
US-A- 2 767 108      US-A- 3 543 696
US-A- 4 054 271**

**FOOD TECHNOLOGY, Band 35, Nr. 4, April
1981, Seite 103, rechte Spalte, "Caramel Production", Chicago, Illinois, US; & JP-A-80 46
148 (AJINOMOTO K.K.)**

(73) Patentinhaber: **MILEI Gesellschaft mit beschränkter Haftung**

**W-7970 Leutkirch-Adrazhofen(DE)**

(72) Erfinder: **Lorenzen, Peter Christian
Ernst-Kauffmann-Strasse 79
W-7140 Ludwigsburg(DE)**
Erfinder: **Grzinia, Michael
Erbachstrasse 9
W-7052 Schwaikheim(DE)**
Erfinder: **Widmaier, Heinz
Hägäcker 8
W-7151 Affalterbach a.N.(DE)**

(74) Vertreter: **Hoeger, Stellrecht & Partner
Uhlandstrasse 14 c
W-7000 Stuttgart 1(DE)**

## Beschreibung

Die Erfindung betrifft ein Verfahren zur Herstellung von karamelisierten Produkten mit unterschiedlichem Bräunungsgrad und unterschiedlicher Konsistenz unter Verwendung von Lactose und Wasser.

Bisher wurden karamelisierte Produkte im allgemeinen aus Saccharose, Dextrose, hydrolisierter Lactose oder Stärkezucker durch Kochen im offenen Kessel oder im Autoklaven unter Druck chargenweise hergestellt. Während dem ganzen Karamelisierungsprozeß muß die Masse gerührt werden. Die Reaktionsdauer ist weitgehend vom gewünschten Farbwert oder Bräunungsgrad der Endprodukte abhängig und beträgt bis zu 10 Stunden. Die Reaktionstemperatur ist ebenfalls sehr unterschiedlich und schwankt zwischen 120 und 180° C.

Ein solches Verfahren ist aus der FR-A-881 974 bekannt, bei dem hydrolisierte Lactose eingesetzt wird und bei dem zur Qualitätsverbesserung, insbesondere zur Verbesserung der Farbe des erhaltenen Karamels, bei der Karamelisierung Ammoniak zugesetzt wird. Die direkte Verwendung von Lactose zur Karamelisierung führt bei diesem Verfahren bei niedrigen Temperaturen von ca. 160 - 170° C zu praktisch keiner Veränderung, während bereits im Temperaturbereich von 180 - 200° C mit der Karamelisierung auch sofort ein Verkohlen der Lactose einsetzt.

Aus der FR-A-2 409 703 ist ein Verfahren zur Karamelisierung von hydrolisierter oder teilhydrolisierter Stärke offenbart, bei welchem ein Extruder zum Einsatz kommt.

Aufgabe der Erfindung ist es, ein Verfahren zur Herstellung von karamelisierten Produkten auf der Basis von Lactose zu schaffen, das kontinuierlich und ohne Zusatz von Ammoniak durchgeführt werden kann, zu einem definierten Farbwert der Endprodukte führt und eine deutliche Verkürzung der Verweildauer der Reaktionsmassen im Reaktor mit sich bringt.

Diese Aufgabe wird bei einem Verfahren der eingangs beschriebenen Art erfindungsgemäß dadurch gelöst, daß Lactose und/oder hydrolisierte Lactose durch kontrolliertes Fördern in einem Extruder, insbesondere in einem Doppelwellenextruder, der auch vom Typ des Gegenläufers sein kann, mit einem Temperaturprofil entlang einer Förderstrecke kontinuierlich karamelisiert werden, wobei die in dem Temperaturprofil enthaltenen Karamelisierungstemperaturen je nach dem gewünschten Bräunungs- oder Karamelisierungsgrad zwischen 100° C und 600° C eingestellt werden und wobei der Trockenmassenanteil der Saccharide zwischen 10 und 90 Gew.% liegt.

Bevorzugt wird als Disaccharid Lactose eingesetzt. Ein besonders günstiges Gewichtsverhältnis von Lactose zu Wasser liegt zwischen 4:6 und 9:1.

Bei einem besonders bevorzugten Verfahren wird die Lactose mit einem Anteil von 80 Gew.% eingesetzt und das Temperaturprofil im Extruder umfaßt einen Temperaturbereich von 70° C bis 300° C. Vorteilhaft läßt sich hydrolisierte Lactose in dem Karamelisierungsprozeß einsetzen. Günstig ist eine hydrolisierte Lactose, deren Trockenmassenanteil zwischen 40 % und 90 % liegt. Besonders vorteilhaft kann eine Mischung karamelisiert werden, die Lactose, hydrolisierte Lactose und Wasser umfaßt, insbesondere mit einem Anteil der Trockenmasse zwischen 10 % und 90 %.

Das Verfahren läßt sich insbesondere so ausgestalten, daß in einer Endstufe des Extruders das karamelisierte Produkt zur Gewinnung von Sirup unter dem Siedepunkt des Wassers gekühlt und anschließend mit Wasser versetzt wird.

Des weiteren ist es vorteilhaft, in einer Endstufe des Extruders das karamelisierte Produkt zur Gewinnung einer hochviskosen, beim Erkalten glasartig festwerdenden Masse auf ca. 200° c aufzuheizen.

Das erfindungsgemäße Verfahren hat insbesondere den Vorteil, daß es kontinuierlich durchgeführt werden kann und der Karamelisierungsgrad in weiten Grenzen variiert werden kann (vom einfachen Lösen der Zuckerstoffe bis zum Zuckercouleur). Karamelisierte Produkte können nach diesem Verfahren in einfacher Weise mit einem definierten Farbwert erhalten werden. Die Temperaturen für den Karamelisierungsprozeß liegen dabei zwischen 100 und 600° C. Bei der Einstellung des Temperaturprofils entlang der Förderstrecke des Extruders ist besonders darauf zu achten, daß die Temperatur im Bereich eines Feststoffeinlasses nicht zu hoch gewählt wird, da sonst der feste Zucker schmilzt und nicht mehr in den Extruder eingezogen wird.

Verfahrensgemäß können die Produkte als Feststoffe oder auch als Sirup gewonnen werden. Die konsistenz des Produktes läßt sich dabei sehr leicht durch eine mehr oder weniger große Zufuhr von Wasser in der letzten Extruderstufe bestimmen.

Schließlich schafft das erfindungsgemäße Verfahren eine neue Verwendungsmöglichkeit für Lactose und hydrolisierte Lactose.

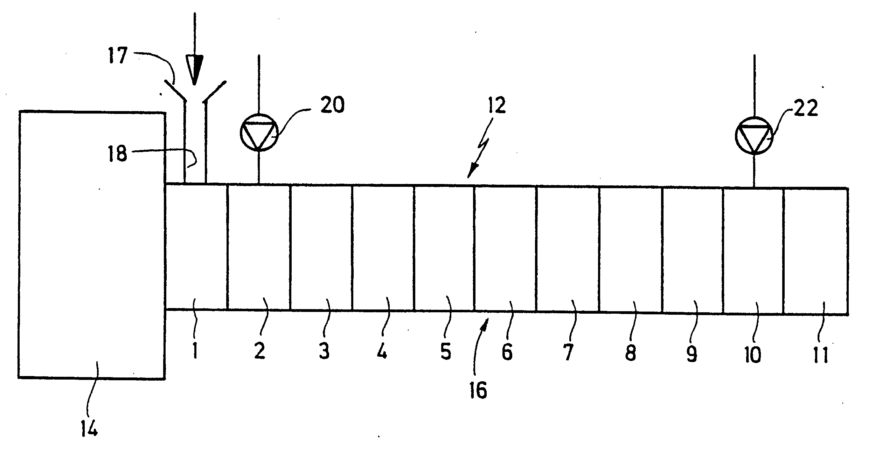

Anhand der Zeichnung und anhand von verschiedenen Beispielen werden diese und weitere Vorteile des erfindungsgemäßen Verfahrens näher erläutert.

Die Zeichnung zeigt schematisch einen Zweiwellen-Extruder vom Typ des Gegenläufers zur Durchführung des erfindungsgemäßen Verfahrens.

Der Zweiwellen-Extruder 12 umfaßt ein Antriebs- und Steuerelement 15 sowie ein Extruderwellen-Gehäuse 16, in dem zwei parallele Schneckenwellen, die sich in gegensinniger Richtung drehen, angeordnet sind. Das Extruderwellen-Gehäuse 16 umfaßt einzelne Elemente 1 bis 11, die alle einzeln temperierbar sind. Das Element 1 ist mit einer Einfüllvorrichtung (17) an einem Feststoffeinlaß (18) ausgerüstet. Am Element (2) ist eine Pumpe (20) angeschlossen, mit der je nach Bedarf Wasser und/oder hydrolysierte Lactose in das Extruderwellen-Gehäuse (16) gefördert werden kann. Die Elemente (3 - 9) dienen zum Einstellen eines Temperaturprofils entlang der Förderstrecke des Extruders. Am Element (10) ist eine Pumpe (22) angeschlossen, die dem karamelisierten Produkt bei Bedarf Wasser zumischt. Das Element (11) schließlich stellt den Produktauslaß des Extruders dar.

Mittels dieses einfachen Aufbaus kann nun die Karamelisierung von Sacchariden unter vielfältigen Bedingungen durchgeführt werden. Im folgenden werden drei Beispiele des erfindungsgemäßen Verfahrens geschildert. Es sei schließlich darauf hingewiesen, daß das erfindungsgemäße Verfahren zur Herstellung von karamelisierten Produkten keinesfalls auf diese Beispiele beschränkt ist.

Beispiel 1:

Karamelisierung von Lactose

Die Schneckenwellen des Extruders werden mit SO Umdrehungen pro Minute angetrieben. Durch die temperierbaren Elemente (1 - 11) wird folgendes Temperaturprofil eingestellt:

| Element: | 1 | 2-3 | 4-8 | 9-11 |
|---|---|---|---|---|
| Temperatur in °C: | 80 | 120 | 300 | 70 |

Einspeisungsgeschwindigkeit für die Lactose in die Einfüllvorrichtung (17): 20 kg pro Stunde.

Fördergeschwindigkeit des Wassers mittels Pumpe (20): 5 kg pro Stunde. Das Produkt wird durch die Schneckenwellen in Richtung zum Produktaustritt des Elements (11) gefördert. Zu Beginn des Karamelisierungsprozesses wird der Zucker in dem in Element (2) zugesetzten Wasser gelöst. Mit fortschreitender Verweildauer wird die Masse durch die Wärmeenergie der weiteren Elemente karamelisiert. Die Karamelisierung wird durch den Mineralstoffgehalt der Lactose (ca. 1 Gewichtsprozent) katalytisch begünstigt.

Bei Eintritt des karamelisierten Produkts in das Element (9) des Extruderwellen-Gehäuses wird es auf eine Temperatur unter der Siedetemperatur des Wassers gekühlt. Im Element (10) wird dann dem karamelisierten Produkt Wasser zugesetzt, bis eine Trockenmasse von 70 % erreicht ist. Das Produkt tritt sodann aus Element (11) als Sirup aus. Während des Abkühlens steigt die Viskosität des Sirups an, dennoch bleibt das Produkt auch nach dem Abkühlen auf Raumtemperatur flüssig.

Der Karamelisierungsgrad (Farbintensität) des Endproduktes kann durch die Wahl des Temperaturprofils, der Anzahl der verwendeten Elemente im Extruderwellen-Gehäuse, der Drehzahl und dem Aufbau der schneckenförmigen Wellen in weiten Grenzen variiert werden.

Will man statt eines Sirups ein pulverförmiges Produkt haben, so verzichtet man auf die Wasserzugabe (Pumpe 22) und heizt die Elemente (9 - 11) auf Temperaturen von etwa 200° C. Das karamelisierte Produkt verläßt bei diesem Verfahren den Extruder dann als hochviskose Masse, die nach dem Erkalten glasartig fest wird und zu einem Pulver vermahlen werden kann.

Beispiel 2:

Karamelisierung von hydrolysierter Lactose

Die hydrolysierte Lactose liegt als Sirup mit einer Trockenmasse von 70 Gewichtsprozent vor. Der Feststoffeinlaß (18) im Element (1) wird verschlossen und die hydrolysierte Lactose wird mittels der Pumpe (20) in das Element (2) des Extruderwellen-Gehäuses eingebracht. Die Fördermenge beträgt 10 bis 20 kg pro Stunde.

Das Verfahren zur Karamelisierung wird wie in Beispiel 1 durchgeführt.

**Ansprüche**

1. Verfahren zur Herstellung von karamelisierten Produkten mit unterschiedlichem Bräunungsgrad oder Farbintensität und unterschiedlicher Konsistenz unter Verwendung von Mono- und/oder Disacchariden und Wasser, wobei die Saccharid-/Wassermischung durch einen beheizbaren Extruder bei erhöhter Temperatur gefördert und karamelisiert wird, **dadurch gekennzeichnet**, als Saccharide Lactose und/oder hydrolysierte Lactose verwendet werden, daß der Trockenmasseanteil der Saccharide zwischen 10 und 90 Gew. % liegt, und daß die Saccharid-/Wassermischung kontrolliert entlang einem Temperaturprofil im Extruder gefördert wird, wobei die in dem Temperaturprofil enthaltenen Karamelisierungstemperaturen je nach gewünschtem Bräunungs- oder Karamelisierungsgrad zwischen 100 und 600° C eingestellt werden.

2. Verfahren nach Anspruch 1, dadurch gekennzeichnet, daß das Gewichtsverhältnis von Lactose zu Wasser zwischen 4:6 und 9:1 liegt.

3. Verfahren nach Anspruch 1 oder 2, dadurch gekennzeichnet, daß die hydrolysierte Lactose einen Trockenmassenanteil zwischen 40 % und 90 % aufweist.

4. Verfahren nach Anspruch 1, dadurch gekennzeichnet, daß die Lactose mit einem Anteil von 80 Gew. % eingesetzt wird und das Temperaturprofil im Extruder einen Temperaturbereich von 70° C bis 300° C umfaßt.

5. Verfahren nach einem der vorhergehenden Ansprüche, dadurch gekennzeichnet, daß in einer Endstufe (9, 10, 11) des Extruders (12) das karamelisierte Produkt zur Gewinnung von Sirup unter den Siedepunkt des Wassers gekühlt und anschließend mit Wasser versetzt wird.

6. Verfahren nach einem der Ansprüche 1 bis 4, dadurch gekennzeichnet, daß in einer Endstufe (9, 10, 11) des Extruders (12) das karamelisierte Produkt zur Gewinnung einer hochviskosen, beim Erkalten glasartig festwerdenden Masse auf ca. 200° C aufgeheizt wird.

**Claims**

1. Process for making caramelized products with varying degrees of browning or intensity of colour and varying consistency, using mono- and/or disaccharides and water, the saccharide/water mixture being conveyed through a heatable extruder at elevated temperature and caramelized, characterized in that there is used as the saccharides lactose and/or hydrolysed lactose, in that the proportion of dry mass of the saccharides is between 10 and 90% by weight, and in that the saccharide/water mixture is conveyed in the extruder under monitoring along a temperature profile where the caramelization temperatures within the temperature profile are adjusted, according to the degree of browning or caramelization desired, between 100 and 600° C.

2. Process according to Claim 1, characterized in that the weight ratio of lactose to water is between 4:6 and 9:1.

3. Process according to Claim 1 or 2, characterized in that the hydrolysed lactose has a proportion of dry mass between 40% and 90%.

4. Process according to Claim 1, characterized in that the lactose is used at a proportion of 80% by weight and the temperature profile in the extruder includes a temperature range from 70° C to 300° C.

5. Process according to one of the preceding claims, characterized in that, in an end stage (9, 10, 11) of the extruder (12), the caramelized product is cooled to below the boiling point of water to obtain syrup, and water is then added.

6. Process according to one of Claims 1 to 4, characterized in that, in an end stage (9, 10, 11) of the extruder (12), the caramelized product is heated up to approximately 200°C to obtain a highly viscous composition which solidifies in a manner resembling glass on cooling.

## Revendications

1. Procédé de fabrication de produits caramélisés présentant un degré de brunissement ou une intensité de coloration différents et une consistance différente, grâce a l'utilisation de mono et/ou disaccharides et d'eau, le mélange saccharides-eau étant transporté et caramélisé dans une extrudeuse chauffable à une température élevée, caractérisé en ce qu'on utilise comme saccharides du lactose et/ou du lactose hydrolysé, que le pourcentage de substance sèche des saccharides se situe entre 10 et 90 % en poids et que le mélange saccharides-eau est transporté de façon contrôlée selon un profil de températures dans l'extrudeuse, les températures de caramélisation comprises dans le profil de températures étant ajustées entre 100 et 600°C selon ledegré de brunissement ou caramélisation souhaité.

2. Procédé selon la revendication 1, caractérisé en ce que le rapport pondéral entre le lactose et l'eau est situé entre 4 : 6 et 9 : 1.

3. Procédé selon la revendication 1 ou 2, caractérisé en ce que le lactose hydrolysé présente un pourcentage de substance sèche situé entre 40 % et 90 %.

4. Procédé selon la revendication 1, caractérisé en ce que le lactose est utilisé à raison de 80 % en poids et que le profil de températures dans l'extrudeuse englobe une plage de températures allant de 70°C à 300°C.

5. Procédé selon l'une des revendications précédentes, caractérisé en ce que le produit caramélisé, pour l'obtention de sirop est refroidi en dessous du point d'ébullition de l'eau, puis additionné d'eau, dans une zone finale (9, 10, 11) de l'extrudeuse (12).

6. Procédé selon l'une des revendications 1 à 4, caractérisé en ce qu'on chauffe à environ 200°C le produit caramélisé pour l'obtention d'une masse très visqueuse, se solidifiant à l'état vitreux au cours du refroidissement, dans une zone finale (9, 10, 11) de l'extrudeuse (12).

EP 0 175 160 B1

17

18

20

12

22

14

1 2 3 4 5 6 7 8 9 10 11

16